# EUROPÄISCHE PATENTSCHRIFT

(11) **EP 2 356 083 B1**
(45) Veröffentlichungstag und Bekanntmachung des Hinweises auf die Patenterteilung: **25.07.2012**
(21) Anmeldenummer: 10762687.1
(22) Anmeldetag: 07.10.2010
(51) Int. Cl.: C04B 7/36, C04B 7/43

(54) **VERFAHREN UND ANLAGE ZUR HERSTELLUNG VON ZEMENTKLINKER**
METHOD AND SYSTEM FOR PRODUCING CEMENT CLINKERS
PROCÉDÉ ET INSTALLATION DE PRODUCTION DE CLINKER DE CIMENT

(30) Priorität: 18.12.2009 DE 102009059110
(43) Veröffentlichungstag der Anmeldung: 17.08.2011
(73) Patentinhaber: ThyssenKrupp Polysius AG, 59269 Beckum (DE)
(72) Erfinder: KUPPER, Detlev, 48291 Telgte (DE)
(74) Vertreter: Tetzner, Michael
(86) Internationale Anmeldenummer: PCT/EP2010/065031
(87) Internationale Veröffentlichungsnummer: WO 2011/072902

(56) Entgegenhaltungen:
- EP-A1- 0 076 894
- WO-A1-2008/148885
- DE-B- 1 292 319
- US-A- 4 101 336

## Beschreibung

Die Erfindung betrifft ein Verfahren und eine Anlage zur Herstellung von Zementklinker.

Beim Zementherstellungsverfahren wird üblicherweise Zementrohmaterial in einem Vorwärmer vorgewärmt, anschließend in einer Calcinierzone weiter erhitzt und schließlich in einem Ofen gebrannt. Dieser Prozess ist äußerst energieintensiv, sodass man ständig auf der Suche nach möglichen Effizienzsteigerungen und Energieeinsparmöglichkeiten ist.

In der DE 40 41 251 A1 wurde beispielsweise vorgeschlagen, einen Teil der Ofenabgase zur Erzeugung von elektrischer Energie zu verwenden. Einen ähnlichen Weg schlägt die EP 0 896 958 A 1 ein, wonach 30 bis 40% der Feuerungsleistung der Ofenanlage als Abwärmeleistung aus der Zyklonvorwärmeranlage ausgekoppelt werden.

In der WO 2008/148885 A1 wird ein Verfahren zur Herstellung von Zementklinker beschrieben, wobei Zementrohmehl in einem Vorwärmer vorgewärmt, in einem Kalzinator kalziniert und in einem Drehofen zu Zementklinker gebrannt wird. Zwischen dem Drehofen und dem Kalzinator wird ein Bypassstrom abgezweigt, der mit einem Teil des aus dem Zementvorwärmer ausgeschleusten Zementrohmehls gekühlt wird, wobei die in einem Zyklon abgeschiedenen groben Partikel des Gemisches aus Bypassstrom und Zementrohmehl dem Kalzinator zugeführt werden.

Der Erfindung liegt nun die Aufgabe zugrunde, das Verfahren und die Anlage zur Herstellung von Zementklinker hinsichtlich der Kosten für die Anlage und der Energieeffizienz zu verbessern.

Erfindungsgemäß wird diese Aufgabe durch die Merkmale der Ansprüche 1 und 10 gelöst.

Das erfindungsgemäße Verfahren zur Herstellung von Zementklinker besteht im Wesentlichen aus folgenden Verfahrensschritten:
- Vorwärmen des Zementrohmaterials in einem Vorwärmer,
- weiteres Erhitzen des vorgewärmten Materials in einer Calcinierzone unter Zuführung von Verbrennungsluft und
- Brennen des so erhitzten Materials in einem Ofen zu Zementklinker,
- wobei ein Teil der im Ofen entstehenden Abgase zur Vorwärmung des Zementrohmaterials im Vorwärmer genutzt wird, während ein anderer Teil abgezweigt und in einem Wärmetauscher zur Vorwärmung der in der Calcinierzone eingesetzten Verbrennungsluft verwendet wird.
Die erfindungsgemäße Anlage zur Durchführung des obigen Verfahrens besteht im Wesentlichen aus
- einem Vorwärmer zum Vorwärmen von Zementrohmaterial,
- einer Calcinierzone zur weiteren Erhitzung des vorgewärmten Materials, die Mittel zum Zuführen von Verbrennungsluft umfasst und
- einem Ofen zum Brennen des weiter erhitzten Materials zu Zementklinker,
- wobei Ofen und Vorwärmer derart in Verbindung stehen, dass ein Teil der im Ofen entstehenden Abgase den Vorwärmer durchströmt,
- einer in der Verbindung zwischen Ofen und Vorwärmer vorgesehenen Abzweigung für einen Teil der Ofenabgase und
- einem Wärmetauscher zur Erwärmung von Verbrennungsluft der mit der Abzweigung in Verbindung steht und mit der Calcinierzone zur Zuführung der erwärmten Verbrennungsluft verbunden ist.

Der Erfmdung liegt der Gedanke zugrunde, dass der Vorwärmer durch eine Erhöhung des Kapazitätsstromverhältnisses von Feststoff und Gas effizienter betrieben werden kann. Mit anderen Worten kann die Wärmeenergie pro Gasvolumenanteil bei einem höheren Kapazitätsstromverhältnisses von Feststoff und Gas besser bzw. leichter auf den Feststoff übertragen werden. Die Abzweigung eines Teilstroms der Ofenabgase bewirkt genau diese Erhöhung des Kapazitätsstromverhältnisses, da die Menge des Feststoffs (Zementrohmaterial) nicht verändert wird, aber ein Teil der Ofenabgase abgezweigt wird und somit nicht zur Vorwärmung zur Verfügung steht.

Die Wärmeenergie des abgezweigten Stroms wird im Wärmetauscher zur Erwärmung der in der Calcinierzone benötigten Verbrennungsluft verwendet, die ansonsten auf andere Art und Weise vorgewärmt werden müsste. Dadurch besteht auch die Möglichkeit, die Calcinierung im Bereich der Calcinierzone mit einer etwas erhöhten Temperatur zu betreiben, um eine etwaige geringere Vorwärmung des Zementrohmaterials im Vorwärmer auszugleichen.

Es besteht somit die Möglichkeit, dass der sich durch den abgezweigten Teil der Ofenabgase ergebende, verminderte Energieeintrag in den Vorwärmer teilweise durch das erhöhte Kapazitätsstromverhältnis zwischen Feststoff und Gas und der damit verbundenen Effizienzsteigerung des Vorwärmers sowie durch die Verbrennungsluftvorwärmung im Wärmetauscher so ausgeglichen wird, dass sich der Gesamtenergieverbrauch für die Herstellung des Zementklinkers verringert oder gleich bleibt, sich zumindest nicht erhöht.

Das verringerte Gasvolumen im Vorwärmer ermöglicht zudem die Verwendung von entsprechend kleiner dimensionierten und damit kostengünstigeren Vorwärmerstufen.

Weitere Ausgestaltungen der Erfindung sind Gegenstand der Unteransprüche.

Gemäß einer bevorzugten Ausführungsform der Erfindung wird der abgezweigte Teil der Ofenabgase vor dem Wärmetauscher einem Abscheider zugeführt wird. Die dort abgeschiedene Staubfracht kann insbesondere dem Ofen aufgegeben werden.

Bei Einsatz von Alternativrohstoffen und/oder Alternativ/Sekundär-Brennstoffen kommt es aufgrund des höheren Wassergehalts zu einem entsprechend größere Menge an Ofenabgasen, für die der Vorwärmer nicht ausgelegt ist. Mit dem erfindungsgemäßen Verfahren kann die erhöhte Gasmenge problemlos über den abgezweigte Strom abgeleitet werden, indem der abgezweigte Strom mengenmäßig so eingestellt wird, dass das Gasvolumen im Vorwärmer konstant bleibt.

Um eine ausreichende Vorwärmung des Zementrohmaterials zu gewährleisten werden vorzugsweise 75 bis 95 Vol-% der Ofenabgase im Vorwämer genutzt. Darüber hinaus ist es zweckmäßig, wenn die Temperatur der in den Vorwärmer einzuführenden Ofenabgase und des abgezweigten Teils wenigstens 830°C beträgt.

Der abgezweigte Teil der Ofenabgase wird unter Umgehung des Vorwärmers dem Wärmetauscher bzw. vorab einem Abscheider, insbesondere einem Zyklonabscheider zugeführt. Es wäre aber auch denkbar, das die Abzweigung erst nach dem untersten Zyklon eines mehrstufigen Zyklonvorwärmers erfolgt.

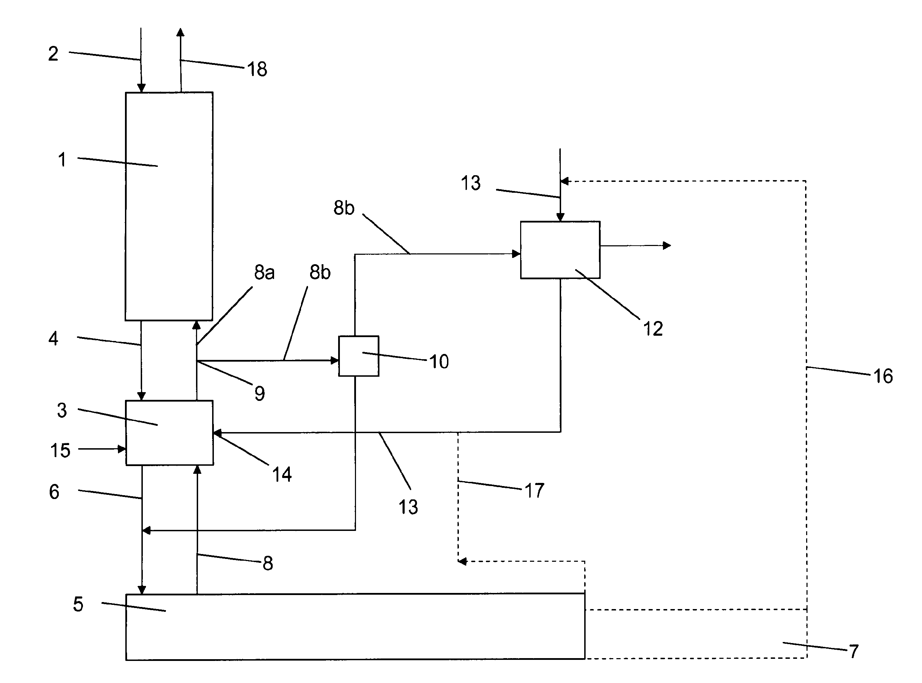

Weiter Vorteile und Ausgestaltungen der Erfindung werden im folgenden anhand der Beschreibung und der Zeichnung näher erläutert.

Die Zeichnung zeigt eine schematische Darstellung einer Anlage zur Herstellung von Zementklinker.

Die Anlage besteht im Wesentlichen aus einem Vorwärmer 1 zum Vorwärmen von Zementrohmaterial 2, einer Calcinierzone 3 zur weiteren Erhitzung des vorgewärmten Materials 4 und einem Ofen 5 zum Brennen des weiter erhitzten bzw. vorcalcinierten Materials 6 zu Zementklinker. An den Ofen schließt sich üblicherweise ein Kühler 7 an.

Der Ofen 5 und der Vorwärmer 1 stehen derart miteinander in Verbindung, dass ein Teil 8a der im Ofen entstehenden Abgase 8 den Vorwärmer durchströmt. Zwischen der Verbindung von Ofen 5 und Vorwärmer 1, hier zwischen Calcinierzone 3 und Vorwärmer 1, ist eine Abzweigung 9 für einen Teil 8b der Ofenabgase vorgesehen.

Der Teil 8b der Ofenabgase wird einem Abscheider 10 zugeführt, um den Gasstrom von seiner Staubfracht 11 zu befreien. Während die Staubfracht 11 zusammen mit dem vorcalcinierten Material 6 dem Ofen 5 aufgeben wird, gelangt der abgezweigte und entstaubte Teil 8b der Ofenabgase in einen Wärmetauscher 12 zur Vorwärmung von Verbrennungsluft 13. Die vorgewärmte Verbrennungsluft gelangt über Mittel 14 zum Zuführen von Verbrennungsluft in den Calcinator, um dort ggf. unter Zuführung von weiterem Brennstoff 15 eine weitere Aufheizung bzw. Vorcalcination des vorgewärmten Materials 4 zu bewirkten.

Gemäß der gestrichelt dargestellten Variante kann für die Verbrennungsluft 13 auch ganz oder teilweise die Abluft (Sekundärluft 16 oder Tertiärluft 17) des Kühlers 7 verwendet werden.

Das oben beschriebene Verfahren eignet sich in besonderem Maße für die Herstellung von Weißzementklinker, da dort für besonders schnelle Abkühlung Wasser zum Einsatz kommt und dadurch die Tertiärluft nur noch eine relativ niedrige Temperatur von etwa 320°C aufweist. Es ist daher ein Vorwärmung erforderlich, bevor sie in der Calcinierzone 3 eingesetzt werden kann. Durch den Wärmetauscher 12 kann mit einem hohen Wirkungsgrad von derzeit etwa 50 bis 70% eine sehr effiziente Vorwärmung erfolgen, ohne dass ein zusätzlicher Energieaufwand erforderlich ist.

Durch die verringerte Gasmenge im Vorwärmer wird sich möglicherweise eine etwas geringere Temperatur des vorgewärmten Materials 4 einstellen. Dies kann aber erforderlichenfalls durch eine entsprechende Erhöhung des Energieeintrags in der Calcinierzone ausgeglichen werden.

Darüber hinaus steht die im Wärmetauscher zur Vorwärmung der Verbrennungsluft nicht benötigte Wärmemenge des abgezweigten Teils 8b der Ofengase für andere Anlagenteile, wie einer Rohmaterialmühle, einer Stromgewinnung oder dgl. zur Verfügung.

Bei der Herstellung von Weißzementklinker hat sich eine Temperatur der Ofenabgase im Bereich der Abzweigung von 850 bis 880°C als zweckmäßig herausgestellt. Die Temperatur der Abluft 18 des Vorwärmers beträgt dann bei einem vierstufigen Vorwärmer beispielsweise 350 bis 370°C. Ohne den abgezweigten Teilstrom lagen die Temperaturen des Abgases um 30 bis 70°C höher.

Die Nutzung wenigstens eines Teils der abgezweigten Ofenabgases führt zu einer effizienteren Energieausnutzung. Darüber hinaus kann zusätzliche Energie für die Vorwärmung der Verbrennungsluft eingespart werden. Die verringerte Baugröße der Vorwärmers aufgrund des geringen Gasstromes führt zu niedrigeren Anschaffungskosten.

## Patentansprüche

1. Verfahren zur Herstellung von Zementklinker, wobei
a. Zementrohmaterial in einem Vorwärmer vorgewärmt wird,
b. das vorgewärmte Material unter Zuführung von Verbrennungsluft in einer Calcinierzone weiter erhitzt wird,
c. das so erhitzte Material in einem Ofen zu Zementklinker gebrannt wird,
d. wobei ein Teil der im Ofen entstehenden Abgase zur Vorwärmung des Zementrohmaterials im Vorwärmer genutzt und ein anderer Teil abgezweigt wird,
**dadurch gekennzeichnet, dass** wenigstens ein Teil der abgezweigten Ofenabgase in einem Wärmetauscher zur Vorwärmung der in der Calcinierzone eingesetzten Verbrennungsluft verwendet wird.

2. Verfahren nach Anspruch 1, **dadurch gekennzeichnet, dass** der abgezweigte Teil der Ofenabgase vor dem Wärmetauscher einem Abscheider zugeführt wird.

3. Verfahren nach Anspruch 2, **dadurch gekennzeichnet, dass** der abgezweigte Teil der Ofengase eine Staubfracht aufweist, die im Abscheider abgeschieden und dem Ofen wieder zugegeben wird.

4. Verfahren nach einem oder mehreren der vorherigen Ansprüche, **dadurch gekennzeichnet, dass** der Teil der abgezweigten Ofenabgase mengenmäßig so eingestellt wird, dass das Gasvolumen durch den Vorwärmer konstant bleibt.

5. Verfahren nach einem oder mehreren der vorhergehenden Ansprüche, **dadurch gekennzeichnet, dass** als vorzuwärmende Verbrennungsluft Tertiärluft eines Kühlers und/oder Umgebungsluft verwendet wird.

6. Verfahren nach einem oder mehreren der vorherigen Ansprüche, **dadurch gekennzeichnet, dass** 75 bis 95 Vol-% der Ofenabgase im Vorwämer genutzt werden.

7. Verfahren nach einem oder mehreren der vorhergehenden Ansprüche, **dadurch gekennzeichnet, dass** der sich durch den abgezweigten Teil der Ofenabgase ergebende verminderte Energieeintrag in den Vorwärmer teilweise durch das Kapazitätsstromverhältnis zwischen Feststoff und Gas und der damit verbundenen Effizienzsteigerung des Vorwärmers sowie durch die Verbrennungsluftvorwärmung im Wärmetauscher so ausgeglichen wird, dass sich der Gesamtenergieverbrauch für die Herstellung des Zementklinkers nicht erhöht.

8. Verfahren nach Anspruch 1, **dadurch gekennzeichnet, dass** der eine Teil der Ofenabgase mit einer Temperatur von wenigstens 830°C in den Vorwärmer eingeführt und der andere Teil der Ofenabgase mit einer Temperatur von wenigstens 830°C abgezweigt wird.

9. Verfahren nach einem oder mehreren der vorhergehenden Ansprüche, **dadurch gekennzeichnet, dass** der dem Wärmetauscher zuzuführende Teil der Ofenabgase zwischen dem Calcinator und dem Vorwärmer abgezweigt wird.

10. Anlage zur Herstellung von Weißzement mit dem Verfahren nach einem oder mehreren der vorhergehenden Ansprüche, mit
a. einem Vorwärmer zum Vorwärmen von Zementrohmaterial,
b. einer Calcinierzone zur weiteren Erhitzung des vorgewärmten Materials, die Mittel zum Zuführen von Verbrennungsluft umfasst und
c. einem Ofen zum Brennen des weiter erhitzten Materials zu Zementklinker,
d. wobei Ofen und Vorwärmer derart in Verbindung stehen, dass ein Teil der im Ofen entstehenden Abgase den Vorwärmer durchströmt,
e. einer in der Verbindung zwischen Ofen und Vorwärmer vorgesehenen Abzweigung für einen Teil der Ofenabgase und
f. einem Wärmetauscher zur Erwärmung von Verbrennungsluft der mit der Abzweigung in Verbindung steht und mit der Calcinierzone zur Zuführung der erwärmten Verbrennungsluft verbunden ist.

## Claims

1. A method for producing cement clinker, wherein
a. raw cement material is preheated in a preheater,
b. the preheated material is heated further in a calcining zone while admitting combustion air,
c. the material heated in this manner is fired in a kiln to form cement clinker,
d. wherein a part of the waste gases developing in the kiln is used to preheat the raw cement material in the preheater, and another part is diverted,
**characterised in that** at least a part of the diverted kiln waste gases is used in a heat exchanger to preheat the combustion air used in the calcining zone.

2. A method according to claim 1, **characterised in that** the diverted part of the kiln waste gases is fed to a separator upstream of the heat exchanger.

3. A method according to claim 2, **characterised in that** the diverted part of the kiln waste gases has a dust load that is separated in the separator and re-admitted to the kiln.

4. A method according to one or more of the preceding claims, **characterised in that** the part of the diverted kiln waste gases is adjusted in terms of quantity in such a manner that the gas volume through the preheater remains constant.

5. A method according to one or more of the preceding claims, **characterised in that** tertiary air of a cooler and/or ambient air is used as combustion air to be preheated.

6. A method according to one or more of the preceding claims, **characterised in that** 75 to 95% by volume of the kiln waste gases are used in the preheater.

7. A method according to one or more of the preceding claims, **characterised in that** the reduced energy input into the preheater resulting from the diverted part of the kiln waste gases is partially compensated by the capacity flow ratio between solid and gas and the associated increase in efficiency of the preheater and by the preheating of combustion air in the heat exchanger, in such a manner that the overall energy consumption for the production of the cement clinker is not increased.

8. A method according to claim 1, **characterised in that** the one part of the kiln waste gases having a temperature of at least 830°C is introduced into the preheater and the other part of the kiln waste gases having a temperature of at least 830°C is diverted.

9. A method according to one or more of the preceding claims, **characterised in that** the part of the kiln waste gases to be fed to the heat exchanger is diverted between the calciner and the preheater.

10. A plant for the production of white cement by the method according to one or more of the preceding claims, having
a. a preheater for preheating cement raw material,
b. a calcining zone for further heating of the preheated material, said zone comprising means for admitting combustion air, and
c. a kiln for firing the further heated material to cement clinker,
d. wherein kiln and preheater are connected in such a way that a part of the waste gases developing in the kiln flows through the preheater,
e. a branch-off provided in the connection between kiln and preheater for a part of the kiln waste gases and
f. a heat exchanger for heating combustion air, which is connected to the branch-off and is connected to the calcining zone for admission of the heated combustion air.

## Revendications

1. Procédé de fabrication de clinker de ciment, où
a. de la matière première de ciment est préchauffée dans un préchauffeur,
b. la matière préchauffée continue à être chauffée dans une zone de calcination, par alimentation en air de combustion,
c. la matière ainsi chauffée est cuite dans un four, pour former du clinker de ciment,
d. où une partie des gaz d'échappement se produisant dans le four est utilisée, dans le préchauffeur, pour le préchauffage de la matière première de ciment, et une autre partie est déviée,
**caractérisé en ce qu'**au moins une partie des gaz d'échappement du four, qui ont été déviés, est utilisée dans un échangeur de chaleur pour le préchauffage de l'air de combustion utilisé dans la zone de calcination.

2. Procédé selon la revendication 1, **caractérisé en ce que** la partie déviée des gaz d'échappement du four est fournie à un séparateur placé en amont de l'échangeur de chaleur.

3. Procédé selon la revendication 2, **caractérisé en ce que** la partie déviée des gaz d'échappement du four présente une charge de poussière qui est déposée dans le séparateur et fournie à nouveau au four.

4. Procédé selon l'une quelconque ou plusieurs des revendications précédentes, **caractérisé en ce que** la partie des gaz d'échappement du four, qui ont été déviés, est réglée quantitativement de manière telle, que le volume de gaz reste constant à travers le préchauffeur.

5. Procédé selon l'une quelconque ou plusieurs des revendications précédentes, **caractérisé en ce que** l'on utilise, comme air de combustion à préchauffer, de l'air tertiaire d'un refroidisseur et/ou de l'air ambiant.

6. Procédé selon l'une quelconque ou plusieurs des revendications précédentes, **caractérisé en ce que** l'on utilise, dans le préchauffeur, de 75 % en volume à 95 % en volume des gaz d'échappement du four.

7. Procédé selon l'une quelconque ou plusieurs des revendications précédentes, **caractérisé en ce que** le moindre apport d'énergie résultant de la partie déviée des gaz d'échappement du four est compensé, dans le préchauffeur, partiellement par le rapport de courant capacitif entre matière solide et gaz d'échappement, et l'augmentation d'efficacité du préchauffeur, liée à ce rapport, ainsi que par le préchauffage de l'air de combustion dans l'échangeur de chaleur, de manière telle que la consommation d'énergie totale pour la fabrication du clinker de ciment n'augmente pas.

8. Procédé selon la revendication 1, **caractérisé en ce que** l'une des parties des gaz d'échappement du four est introduite dans le préchauffeur à une température d'au moins 830°C, l'autre partie des gaz d'échappement du four étant déviée à une température d'au moins 830°C.

9. Procédé selon l'une quelconque ou plusieurs des revendications précédentes, **caractérisé en ce que** la partie des gaz d'échappement du four, à fournir à l'échangeur de chaleur, est déviée entre le calcinateur et le préchauffeur.

10. Installation pour la fabrication de ciment blanc, en utilisant le procédé selon l'une quelconque ou plusieurs des revendications précédentes, comportant
a. un préchauffeur servant au préchauffage de matière première de ciment,
b. une zone de calcination servant au chauffage complémentaire de la matière préchauffée, zone de calcination qui comprend des moyens servant à fournir de l'air de combustion, et
c. un four servant à la cuisson de la matière chauffée de façon complémentaire, pour former du clinker de ciment,
d. où le four et le préchauffeur communiquent l'un avec l'autre, de manière telle qu'une partie des gaz d'échappement se produisant dans le four traverse le préchauffeur,
e. une déviation pour une partie des gaz d'échappement du four, prévue dans la liaison formée entre le four et le préchauffeur, et
f. un échangeur de chaleur servant au chauffage de l'air de combustion, échangeur de chaleur qui communique avec la déviation et est relié à la zone de calcination, pour fournir de l'air de combustion chauffé.
